# EUROPÄISCHE PATENTSCHRIFT

(11) **EP 1 964 866 B1**
(45) Veröffentlichungstag und Bekanntmachung des Hinweises auf die Patenterteilung: **07.09.2011**
(21) Anmeldenummer: 08152088.4
(22) Anmeldetag: 28.02.2008
(51) Int. Cl.: C08G 18/08, C08G 18/10, C08G 18/28, C08G 18/48, C08G 18/50, C08G 18/66, C08G 18/79

(54) **Herstellung harter Polyurethanelastomerformteile**
Manufacture of hard polyurethane elastomer moulded articles
Fabrication de pièces de formage élastomères dures en polyuréthane

(30) Priorität: 02.03.2007 EP 07103442
(43) Veröffentlichungstag der Anmeldung: 03.09.2008
(73) Patentinhaber: BASF SE, 67056 Ludwigshafen (DE)
(72) Erfinder: Redl, Franz Xaver, 49448, Lemförde (DE); Illguth, Rolf, 49356, Diepholz (DE)

(56) Entgegenhaltungen:
- EP-A- 0 157 119
- DE-A1- 4 232 941
- US-A- 4 218 543
- US-A- 5 185 420

## Beschreibung

Die vorliegende Erfindung betrifft ein Verfahren zur Herstellung von harten, porenfreien, thermoplastischen Polyurethanelastomerformteilen mit einer Shore D-Härte nach DIN 53505 von 60 oder mehr, bei dem man polymere Diole und Kettenverlängerer mit Isocyanat und gegebenenfalls Katalysatoren, Reaktivkettenverlängerern und sonstigen Zusatzstoffen zu einer Reaktionsmischung vermischt, in eine Form gibt und zum Polyurethanelastomer aushärtet, wobei die Reaktionsmischung des weiteren einen Emulgator aufweist. Weiter betrifft die vorliegende Erfindung ein hartes Polyurethanelastomer, erhältlich nach einem solchen Verfahren.

Formteile zur Herstellung von elastomerem Polyurethan werden üblicherweise im Niederdruckverfahren. Dazu werden Isocyanat, Isocyanatreaktive Komponente und gegebenenfalls Kettenverlängerer sowie Katalysatoren und weitere Zusatzstoffe mit einer exakt dosierenden Zahnradpumpe in einen Mischkopf dosiert, dort mit Hilfe eines mechanischen Rührwerks vermischt und in eine offene Form gegeben. Ein solches, sogenanntes Niederdruckverfahren ist beispielsweise in "Kunststoffhandbuch, Band 7, Polyurethane", Carl Hanser Verlag, 3. Auflage 1993, Kapitel 4, beschrieben. Nachteilig am Niederdruckverfahren ist, dass eine wirtschaftliche Herstellung der Formteile nur in offenen Formen bzw. in geschlossenen Formen mit einfacher Geometrie und geringem Füllvolumen erfolgen kann, da der Förderdruck und die Förderleistung der Niederdrucksysteme nicht ausreicht, um komplexe, großvolumige geschlossene Formen zu füllen. Sollen größere Formteile hergestellt werden, müssen die Katalysatoren so gewählt werden, dass die Reaktionsmischung noch lange eine geringe Viskosität aufweist, was eine lange Aushärtezeit zur Folge hat und damit unwirtschaftlich ist.

DE 42 32 941 offenbart die Herstellung von elastomeren Polyurethanformteilen im Gegenstromverfahren, dem sogenannten Hochdruckverfahren. Dieses Verfahren ermöglicht eine schnelle und vollständige Füllung auch komplexer, großvolumiger Formen, da die Füllung der Form mit hohem Druck erfolgen kann und das Hochdruckverfahren eine große Förderleistung ermöglicht. Ein Nachteil des Verfahrens nach DE 42 32 941 ist, dass Formteile mit einer Härte von 60 Shore D nach DIN 53505 und darüber schlechte mechanische Eigenschaften wie Steifigkeit, Zugfestigkeit und Bruchdehnung sowie Oberflächendefekte aufweisen.

US 5185420 beschreibt ein Verfahren zur Herstellung eines thermoplastischen Elastomeren, bei dem man ein Polyol mit einem Molekulargewicht von 200 bis 8000 g/mol mit einem Diisocyanat zu einem isocyanatterminierten Prepolymer umsetzt und das Isocyanatprepolymerin einer Form mit einem difunktionellen, gegenüber Isocyanat reaktiven Kettenverlängerer umsetzt, wobei ein Elastomer mit einer shore A-Härte von etwa 50 und einer shore D Härte von etwa 65 erhalten wird.

Aufgabe der vorliegenden Erfindung war es daher ein Verfahren zur Herstellung von Polyurethanformteilen zu liefern, wobei die hergestellten Polyurethanformteile eine Härte von 60 Shore D nach DIN 53505 und mehr aufweisen, gute mechanische Eigenschaften wie Steifigkeit, Zugfestigkeit und Bruchdehnung aufweisen sowie keine Oberflächendefekte zeigen.

Die erfindungsgemäße Aufgabe wird gelöst durch ein Verfahren zur Herstellung von harten, porenfreien thermoplastischen Polyurethanelastomerformteilen mit einer Shore D-Härte nach DIN 53505 von 60 oder mehr, bei dem man polymere Diole und Kettenverlängerer mit Isocyanat und gegebenenfalls Katalysatoren, Reaktivkettenverlängerern und sonstigen Zusatzstoffen zu einer Reaktionsmischung vermischt, in eine Form gibt und zum Poly-urethanelastomer aushärtet, wobei die Reaktionsmischung des weiteren einen Emulgator aufweist und die Formtemperatur 70 bis 130 °C beträgt und man die polymeren Diole, den Kettenverlängerer, den Emulgator und gegebenenfalls Katalysatoren, Reaktivkettenverlängerern und sonstigen Zusatzstoffen im Gegenstromverfahren bei einem Druck von mehr als 100 bar mit dem Isocyanat vermischt und die erhaltene Mischung in eine geschlossene Form gibt..

Als polymere Diole werden im Rahmen der Erfindung Polyetherole, Polyesterole, Polybutadiendiol oder Polycaprolacton zum Beispiel Polyether und Copolyether, enthaltend Propylenoxid wie Polypropylenoxid oder Polypropylen-co-ethylenoxid oder Polyether und Copolyether, enthaltend Polytetrahydrofuran und Derivate davon wie Polytetrahydrofuran, Poly(tetrahydrofuran-co-ethylenether)glykol, Polycarbonatglykole wie Poly(pentan-1,5-carbonat)glykol und Poly(hexan-1,6-carbonat)glykol und Poly(ethylen-co-propylenadiapat)glykol sowie Polyesterole wie Polyester aus Adipinsäure, Butandiol und Neopentylglykol aus Adipinsäure, Butandiol und Hexandiol, aus Adipinsäure und Butandiol, aus Adipinsäure und Hexandiol, aus Adipinsäure und einer Mischung aus Butandiol und Ethylenglycol, aus Adipinsäure und einer Mischung aus Hexandiol und Ethylenglycol, aus Dodekandisäure und Neopentylglykol oder aus Sebacinsäure und Neopentylglykol eingesetzt. Vorzugsweise werden Polybutadiendiol, Polycaprolacton, Polyester aus Adipinsäure und Butandiol, Polytetrahydrofuranglykol, Polypropylenoxyd, Polyester aus Adipinsäure, Butandiol und Neopentylglykol, Polyester aus Adipinsäure, Butandiol und Hexandiol, Polyester aus Adipinsäure und Hexandiol, Polyester aus Dodekandisäure und Neopentylglykol, oder Polyester aus Sebacinsäure und Neopentylglykol verwendet. Besonders bevorzugt wird alleine Polytetrahydrofuran als polymeres Diol eingesetzt.

Das zahlenmittlere Molekulargewicht des polymeren Diols beträgt vorzugsweise 200 bis 4000 g/mol. Wird Polytetrahydrofuranglykol als polymeres Diol eingesetzt, beträgt das zahlengemittelte Molekulargewicht vorzugsweise 200 bis 2500 g/mol, besonders bevorzugt 300 bis 2100 g/mol, weiter bevorzugt 800 bis 2100 g/mol und insbesondere 800 bis 1200 g/mol.

Weiter wird ein Kettenverlängerer zu der Reaktionsmischung zugegeben. Dabei handelt es sich um ein Diol mit einem Molekulargewicht kleiner 400, bevorzugt kleiner 300 und insbesondere kleiner 200 g/mol. Beispielsweise können als Kettenverlängerer Hydrochinon-bis-(2-hydroxyethyl)ether, Resorcin, 1,6 Hexandiol, Monoethylenglykol, Diethylenglykol oder Butandiol, wie1,4-Butandiol, 2,3 Butandiol oder Mischungen beider. Vorzugsweise wird Butandiol, besonders bevorzugt 1,4 Butandiol als Kettenverlängerer eingesetzt.

Das Gewichtsverhältnis von Kettenverlängerer zu polymerem Diol beträgt vorzugsweise 30:70 bis 60:40, bevorzugt 40:60 bis 50:50.

Als Isocyanat werden vorzugsweise Diisocyanate, besonders bevorzugt aromatische Diisocyanate, aber auch aliphatische Diisocyanate, wie Hexamethylendiisocyanat (HDI), 4,4'-DÜsocyanato-dicyclohexylmethan (HMDI) oder Isophorondiisocyanat (IPDI), eingesetzt. Die aromatischen Isocyanate umfassen beispielsweise aromatische Diisocyanate, wie 2,2'-, 2,4'- und 4,4'-Diphenylmethandiisocyanat oder deren Derivate, die Mischungen aus verschiedenen monomeren Diphenylmethandüsocyanaten, 2,4- oder 2,6-Toluylendiisocyanat (TDI) oder deren Mischungen oder Naphthylendiisocyanat (NDI) oder Mischungen daraus. Vorzugsweise wird monomeres 4,4'-Diphenylmethandiisocyanat oder Mischungen von 4,4'-Diphenylmethandiisocyanat mit dessen Derivaten als Isocyanat eingesetzt. Dabei kann 4,4'-Diphenylmethandiisocyanat besonders bevorzugt geringe Mengen bis etwa 10 Gew.-% Carbodiimid, uretdion-, allophanat- oder uretoniminmodifiziertes 4,4'-Diphenylmethandiisocyanat, insbesondere carbodiimid modifiziertes 4,4'-Diphenylmethandiisocyanat enthalten.

Die Funktionalität des eingesetzten Isocyanats kann durch Zugabe höherfunktionaler Isocyanate erhöht werden. Vorzugsweise beträgt die Funktionalität des Isocyanats 2,0 bis 2,2, insbesondere 2,0. Zur Erhöhung der Funktionalität kann beispielsweise carbodiimidmodifiziertes 4,4'-Diphenylmethandiisocyanat eingesetzt werden.

Als Isocyanate im Sinn der Erfindung können auch Isocyanate in Form von Polyisocyanatprepolymeren eingesetzt werden. Diese Polyisocyanatprepolymere sind erhältlich, indem vorstehend beschriebene Polyisocyanate im Überschuss, beispielsweise bei Temperaturen von 30 bis 100 °C, bevorzugt bei etwa 80 °C, mit polymeren Diolen wie oben beschrieben und gegebenenfalls den oben beschriebenen Kettenverlängerern zum Prepolymer umgesetzt werden. Vorzugsweise werden als Prepolymere Umsetzungsprodukte aus 4,4' Diphenylmethandiisocyanat und Polytetrahydrofuran eingesetzt. Dabei beträgt der Isocyanatgehalt im Prepolymer vorzugsweise 20 bis 30 Gew.-% NCO. Die Prepolymere können dabei auch monomeres 4,4'-Diphenylmethandiisocyanat aufweisen.

In einer besonders bevorzugten Ausführungsform wird als Isocyanat ein Prepolymer mit einem Isocyanatgehalt von 25 bis 30 Gew.-% NCO aus 4,4' Diphenylmethandiisocyanat und Polytetrahydrofuran mit einem zahlenmittleren Molekulargewicht von 800 bis 1200 g/mol eingesetzt. Insbesondere wird als Isocyanat eine Mischung, bestehend aus einem Prepolymer mit einem Isocyanatgehalt 25 bis 30 Gew.-% NCO aus 4,4' Diphenylmethandiisocyanat und Polytetrahydrofuran mit einem zahlenmittleren Molekulargewicht von 800 bis 1200 g/mol und carbodiimidmodifiziertem 4,4'-Diphenylmethandiisocyanat eingesetzt. Der Anteil an carbodiimidmodifiziertem 4,4'-Diphenylmethandiisocyanat beträgt vorzugsweise 0 bis 10 Gew.-% , bezogen auf das Gesamtgewicht des eingesetzten Isocyanats.

Als Emulgator kann jedes bekannte Tensid wie anionische Tenside, kationische Tenside oder nichtionische Tenside eingesetzt werden. Vorzugsweise werden nichtionische Tenside wie Fettalkoholethoxylate, Oxoalkoholethoxylate, Guerbetalkoholethoxylate, Alkylphenolethoxylate, ethoxyliertes Oleylamin, ethoxyliertes Kokosfettamin, ethoxyliertes Talgfettamin, ethoxyliertes Ölsäureamid, EO/PO-Blockpolymerisate, PIB-Derivate und Amide der Ölsäure eingesetzt. Insbesondere wird als Emulgator ein Alkoxyethylenglycolether der allgemeinen Formel

RO(CH₂-CH₂-O)ₓH

eingesetzt, wobei R ein linearer oder verzweigtkettiger oder cyclischer Alkylrest mit 5 bis 20 Kohlenstoffatomen ist und x für eine ganze Zahl von 3 bis 15 steht. Besonders bevorzugt handelt es sich bei R um einen Decylrest und x steht für 7.

Der Gehalt an nichtionischem Tensid ist vorzugsweise im Bereich von 0,05 bis 5, besonders bevorzugt von 0,1 bis 1 Gew.-%, bezogen auf das Gesamtgewicht von polymerem Diol, Kettenverlängerer, Reaktivkettenverlängerer und Katalysator.

Als Reaktivkettenverlängerer werden Substanzen eingesetzt, die zwei, gegenüber Isocyanaten reaktive Gruppen aufweisen, wobei die Substanzen zumindest eine freie primäre NH₂-Gruppe aufweist und die Polyurethanreaktion beschleunigen. Die weitere gegenüber Isocyanat reaktive Gruppe kann beispielsweise ausgewählt sein aus einer primären Aminogruppe, einer Alkoholgruppe oder einer Thiolgruppe. Als Reaktivkettenverlängerer können beispielsweise aliphatische oder aromatische Amine verwendet werden. Besonders bevorzugte Reaktivkettenverlängerer sind niedermolekulare Diamine, insbesondere aliphatische Diamine. Dabei enthalten die Reaktivkettenverlängerer im Rahmen dieser Erfindung zwischen den zwei gegenüber Isocyanaten reaktiven Gruppen vorzugsweise zumindest zwei Alkylengruppen mit jeweils zumindest einem, bevorzugt 2 bis 4 Kohlenstoffatomen, wobei die Alkylengruppen jeweils von einem Heteroatom getrennt werden. Besonders bevorzugt wird als Reaktivkettenverlängerer ein linearer Polyether auf Propylenoxidbasis mit zwei primären Aminogruppen eingesetzt.

Vorzugsweise ist das Molekulargewicht des Reaktivkettenverlängerers zwischen 100 und 800 g/mol, besonders bevorzugt zwischen 200 und 600 g/mol und insbesondere zwischen 300 und 500 g/mol.

Der Anteil der Reaktivkettenverlängerer beträgt vorzugsweise 0,2 bis 6,0 Gew.-%, besonders bevorzugt 1 bis 4,0 Gew.-%, bezogen auf das Gesamtgewicht von polymerem Diol, Kettenverlängerer, Reaktivkettenverlängerer und Katalysator.

Als Katalysatoren können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dial-kylzinn-(IV)-salze von organischen Carbonsäuren, z. B. Dibutylzinndiacetat, Dibutylzinndilaurat, Dibutylzinnmaleat und Dioctylzinndiacetat, oder Dialkylzinn-(IV)-mercaptide sowie Bismutcarboxylate wie Bismut(III)-neodecanoat, Bismut-2-etyhlhexanoat und Bismut-octanoat sowie Phenylquecksilber-(II)-salze von organischen Carbonsäuren, z. B. Phenylquecksilberlaurat oder Phenylquecksilberpropionat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexyl-morpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethyl-imidazol, 1-Aza-bicyclo-(3,3,0)-octan und 1,4-Diaza-bicyclo-(2,2,2)-octan sowie Alkanolaminverbindungen wie Triethanolamin, Triisopropanolamin, N-Methyl- und N-Ethyl-diethanolamin und Dimethylethanolamin. Dabei können die stark basischen Aminkatalysatoren auch ganz oder teilweise durch Zugabe von Säuren blockiert sein. Die Katalysatoren können einzeln oder als Mischungen verwendet werden. Gegebenenfalls werden als Katalysatoren (e) Mischungen aus Metallkatalysatoren und basischen Aminkatalysatoren, die gegebenenfalls ganz oder teilweise blockiert sind, verwendet.

Die Katalysatoren können beispielsweise in einer Konzentration von 0,001 bis 5 Gew.-%, insbesondere 0,002 bis 1 Gew.-% als Katalysator bzw. Katalysatorkombination, bezogen auf das Gewicht von polymerem Diol, Kettenverlängerer, Reaktivkettenverlängerer und Katalysator eingesetzt werden.

Als Zusatzstoffe können alle zur Herstellung von Polyurethanen bekannten Hilfs- und Zusatzstoffe verwendet werden. Genannt seien beispielsweise Trennmittel, Füllstoffe, Farbstoffe, Pigmente, Flammschutzmittel, oberflächenaktive Substanzen und Hydrolyseschutzmittel. Solche Substanzen sind beispielsweise in "Kunststoffhandbuch, Band 7, Polyurethane", Carl Hanser Verlag, 3. Auflage 1993, Kapitel 3.4.4 und 3.4.6 bis 3.4.11 genannt.

Als geeignete Trennmittel seien beispielhaft genannt: Polysilikone, Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A 36 07 447 offenbart, oder Gemischen aus einer Iminoverbindung, dem Metallsalz einer Carbonsäure und gegebenenfalls einer Carbonsäure, wie beispielsweise in US 4,764,537 offenbart. Vorzugsweise wird als Trennmittel ein Metallsalz von Stearinsäure, besonders bevorzugt Zinkstearat eingesetzt, insbesondere zusammen mit dem Reaktivkettenverlängerer. Dabei wird das Zinkstearat im flüssigen Reaktivkettenverlängerer, vorzugsweise dem Polypropylenoxid mit zwei endständigen Aminogruppen, gelöst.

Werden Trennmittel eingesetzt, geschieht dies vorzugsweise in Mengen von 10 bis 50, besonders bevorzugt 30 bis 45 Gew.-%, Gew.-%, bezogen auf das Gewicht von Reaktivkettenverlängerer.

Als Füllstoffe, insbesondere verstärkend wirkende Füllstoffe, sind die an sich bekannten üblichen organischen und anorganischen Füllstoffe, Verstärkungsmittel usw. zu verstehen. Im einzelnen seien beispielhaft genannt: anorganische Füllstoffe wie silikatische Mineralien, beispielsweise Quarzmehle, Schichtsilikate wie Antigorit, Serpentin, Hornblenden, Amphibole, Chrisotil und Talkum; Metalloxide wie Kaolin, Aluminiumoxide, Titanoxide und Eisenoxide, Metallsalze wie Kreide, Schwerspat und anorganische Pigmente wie Cadmiumsulfid, Zinksulfid sowie Glas und andere. Vorzugsweise verwendet werden Kaolin (China Clay), Quarzmehle, Aluminiumsilikat und Copräzipitate aus Bariumsulfat und Aluminiumsilikat sowie natürliche und synthetische faserförmige Mineralien wie Wollastonit, Metall- und Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Vorzugsweise werden als Füllstoffe solche mit einem mittleren Teilchendurchmesser von 0,1 bis 500, besonders bevorzugt von 1 bis 100 und insbesondere von 1 bis 10 µm eingesetzt. Dabei wird unter Durchmesser bei nicht kugelförmigen Teilchen deren Ausdehnung entlang der kürzesten Raumachse verstanden. Bevorzugt werden als Füllstoffe Glasfasern und Quarzmehle eingesetzt. Weiter können auch Gewebematten wie Glasfasermatten oder Naturfasermatten als Füllstoffe eingesetzt werden.

Die anorganischen und organischen Füllstoffe können einzeln oder als Gemische verwendet werden und werden der Reaktionsmischung vorteilhafterweise in Mengen von 0,5 bis 30 Gew.-%, besonders bevorzugt 10 bis 20 Gew.-%, bezogen auf das Gewicht der gesamten Reaktionsmischung eingesetzt.

Als Additive zur Wasseradsorption werden vorzugsweise Aluminosilikate, ausgewählt aus der Gruppe der Natriumaluminasilikate, Kaliumaluminasilikate, Calciumaluminasilikate, Cäsiumaluminasilikate, Bariumaluminasilikate, Magnesiumaluminasilikate, Strontiumaluminasilikate, Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additiv zur Wasserabsorption eine mittlere Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem.

Wenn ein Additiv zur Wasserabsorption zugegeben wird, geschieht dies vorzugsweise in Mengen größer einem Gewichtsteil, besonders bevorzugt im Bereich von 1,2 bis 4 Gewichtsteilen, bezogen auf das Gesamtgewicht von polymerem Diol, Kettenverlängerer, Reaktivkettenverlängerer und Katalysator.

Als Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole wie Dibromneopentylalkohol, Tribromneopentylalkohol und PHT-4-Diol sowie chlorierte Phosphate wie z. B. Tris-(2-chlorethyl)phosphat, Tris-(2-chlorisopropyl)phosphat (TCPP), Tris(1,3-dichlor-isopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate wie Melamin oder Mischungen aus mindestens zwei Flammschutzmitteln wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 60 Gew.-%, besonders bevorzugt von 5 bis 50 Gew.-%, insbesondere von 5 bis 40 Gew.-%, bezogen auf das Gesamtgewicht von polymerem Diol, Kettenverlängerer, Reaktivkettenverlängerer und Katalysator, verwendet.

Zur Herstellung der erfindungsgemäßen Polyurethanformteile werden die polymeren Diole, Kettenverlängerer und gegebenenfalls Katalysatoren, Reaktivkettenverlängerer und sonstigen Zusatzstoffen mit Isocyanat zu einer Reaktionsmischung vermischt, in eine Form gegeben und zum Polyurethanelastomer ausgehärtet. Dazu werden vorzugsweise die polymeren Diole, Kettenverlängerer und gegebenenfalls vorhandene Reaktivkettenverlängerer, Katalysatoren und Zusatzstoffe und Isocyanate in solchen Mengen zur Umsetzung gebracht werden, dass der Isocyanatindex 80 bis 120, bevorzugt 90 bis 110 beträgt. Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Vermischung erfolgt dabei im Hochdruckverfahren. Dabei werden die polymeren Diole, Butandiol und gegebenenfalls Katalysatoren, Reaktivkettenverlängerer und sonstige Zusatzstoffe zu einer Polyolkomponente vereinigt. Die Polyolkomponente und Isocyanat werden dann mit hohem Druck von jeweils mindestens 100, vorzugsweise 100 bis 300 bar in eine Mischkammer eingespritzt und dort vereinigt. Der Druckabfall zum Ausgang der Mischkammer beträgt mindestens 50 bar, bevorzugt 50 bis 250 bar. Mit diesem Verfahren ist es möglich, große komplexe Formen mit Fließwegen von bis zu 3 Metern innerhalb von wenigen Sekunden zu füllen. Vorzugsweise werden die Polyolkomponente und Isocyanat auf eine Temperatur zwischen 30 und 120 °C, bevorzugt auf 50 bis 100 °C temperiert. Die Formtemperatur beträgt zwischen 70 und 130 °C, besonders bevorzugt zwischen 100 und 120 °C.

Ein weiterer Vorteil des erfindungsgemäßen Verfahrens ist, dass große, komplexe Formteile aus thermoplastischem Polyurethan hergestellt werden können. Unter thermoplastischem Polyurethan wird ein Polyurethan verstanden, das thermoplastische Eigenschaften zeigt. Dabei versteht man unter thermoplastischen Eigenschaften, dass das thermoplastische Polyurethan bei Erwärmen wiederholt aufschmelzbar ist und dabei plastisches Fließen zeigt. Weitere Details zu erfindungsgemäßen thermoplastischen Polyurethanen finden sich im "Kunststoffhandbuch, Band 7, Polyurethane", Carl Hanser Verlag, 3. Auflage 1993, Kapitel 8.2. Thermoplastisches Polyurethan im Rahmen der Erfindung wird erhalten, wenn als Isocyanat ausschließlich Diisocyanat eingesetzt wird. Die erfindungsgemäßen Formteile aus thermoplastischen Polyurethan haben den Vorteil, dass diese recycelt werden können, und dass thermisches Schweißen dieser Formteile, beispielsweise zu Reparaturzwecken, möglich ist. Dagegen können Formteile aus thermoplastischem Polyurethan zwar prinzipiell auch im konventionellen Spritzgussverfahren hergestellt werden, aufgrund der gegenüber der Reaktionsmischung im erfindungsgemäßen Verfahren höheren Viskosität der geschmolzenen Polymere ist im Spritzgussverfahren die Größe und Komplexität der Formen aber begrenzt.

Weiter konnte die Bruchdehnung des erfindungsgemäßen Formteils durch Zugabe von Reaktivkettenverlängerern deutlich erhöht werden.

Die nach dem erfindungsgemäßen Verfahren erhaltenen Polyurethanformteile weisen eine Härte von 60 Shore D und mehr, vorzugsweise 65 bis 80 Shore D und besonders bevorzugt 70 bis 80 Shore D nach DIN 53505 auf. Diese Formteile können beispielsweise als Verkleidungsteile für Nutzfahrzeuge, Interieur und Exterieur Anwendungen im Fahrzeugbau, Karosseriebestandteile, Gehäuseverkleidungen und Verkleidungsteile von Maschinenanlagen eingesetzt werden.

Weiterhin weisen die füllstoffhaltigen Formteile vorzugsweise ein Zugmodul nach DIN EN ISO 527 von größer 1200 MPa, besonders bevorzugt größer 1500 MPa auf sowie eine Bruchdehnung nach DIN EN ISO 527 von größer 80 % und ein Biegemodul, gemessen nach DIN EN ISO 178, von größer 1200 MPa und eine Wärmeformbeständigkeit nach DIN EN ISO 75-2, die als HDT/B bestimmt wird, von größer 120 °C auf.

Die vorliegende Erfindung soll durch nachfolgende Beispiele veranschaulicht werden:

Gemäß der folgenden Tabelle wurden Polyurethanformteile hergestellt. Dazu wurde das eingesetzte Isocyanat als Isocyanatkomponente sowie die übrigen Einsatzstoffe als Polyolkomponente in eine Hockdruckmaschine gegeben und im Gegenstrom bei einer Temperatur von jeweils 70 °C und einem Druck von jeweils 170 bar vermischt und in eine Form gegeben. Das Salz wurde vor Zugabe zu den restlichen Bestandteilen der Polyolkomponente vollständig im Diamin bei 110 °C gelöst. Die Formtemperatur betrug 110 °C, das Formvolumen 3 I und die Schusszeit betrug 4 bis 6 Sekunden. Die Mengenangaben sind Gewichtsteile.

**Tabelle**

| Versuch | V1 | V2 | 1 | 2 | 3 |
|---|---|---|---|---|---|
| Verarbeitung | HD | HD | HD | HD | HD |
| Polyol 1 | 53 | 53 | 52 | 52 | 52 |
| Polyol 2 | 44 | 44 | 43 | 43 | 43 |
| Trockenmittel 1 | | | 5 | 5 | 5 |
| Trockenmittel 2 | 3 | 3 | | | |
| Katalysator 1 | | | 0,006 | 0,006 | 0,006 |
| Katalysator 2 | 0,012 | 0,012 | 0,002 | 0,002 | 0,002 |
| Emulgator | | | 0,25 | 0,25 | 0,25 |
| Diamin | | | | | 3 |
| Salz | | | | | 2 |
| Füllstoff | | 66 | | 65 | 67 |
| Isocyanat | 164 | 164 | 161 | 156 | 164 |
| Index | 100 | 100 | 100 | 100 | 100 |
| | | | | | |

| Eigenschaften | | | | | |
|---|---|---|---|---|---|
| Oberfläche | -+ | -+ | + | + | ++ |
| Hautablöser im Anguss | - - | - - | -+ | -+ | ++ |
| Zugmodul [MPa] | 720 | 1260 | 660 | 1670 | 1960 |
| Zugfestigkeit [MPA] | 25 | 29 | 30 | 27 | 36 |
| Bruchdehnung [%] | 75 | 50 | 120 | 36 | 127 |
| Härte - Shore D | 72 | 78 | 72 | 75 | 74 |

Zugmodul, Zugfestigkeit und Bruchdehnung wurden gemäß DIN EN ISO 527 bestimmt.

Dabei bedeuten:
- Polyol 1:: Polytetrahydrofuran mit einem zahlenmittleren mittlerem Molekulargewicht von 1000 g/mol
- Polyol 2:: 1,4 Butandiol
- Trockenmittel 1:: dispergiertes Zeolith in Diol mit einer OH-Zahl von 80 mg(KOH)/kg
- Trockenmittel 2:: Zeolithpulver
- Katalysator 1:: Dimethylzinndilaurat
- Katalysator 2:: Dioctylzinndimercaptid
- Emulgator:: Heptaethylenglykolmonodecylether
- Diamin:: Polyether auf Propylenoxidbasis mit zwei primären Aminogruppen und einem zahlenmittleren Molekulargewicht von 400 g/mol
- Salz:: Zinkstearat
- Füllstoff:: Kurzglasfaser, Lanxess^{®} MF 7980
- Isocyanat:: Prepolymer aus 4,4'-Diphenylmethandiisocyanat und Polytetrahydrofuran mit einem zahlenmittleren mittlerem Molekulargewicht von 1000 g/mol und carbodümidmodifiziertem Polyisocyanat

Aus der Tabelle geht hervor, dass durch die Verwendung von Emulgator (Versuche 1 bis 3) im Vergleich zu Formulierungen ohne Verwendung von Emulgator (Vergleichsversuche V1 und V2) das Auftreten von Hautablösern im Anguss verringert und die Oberfläche der Formteile verbessert werden kann. Weiter zeigt sich, dass die Bruchdehnung durch Zugabe von Diamin und Zinkstearat in Versuch 3 gegenüber dem analogen Versuch ohne Zugabe von Diamin und Zinkstearat deutlich verbessert wird.

## Patentansprüche

1. Verfahren zur Herstellung von porenfreien thermoplastischen Polyurethanelastomerformteilen mit einer Shore D Härte nach DIN 53505 von 60 oder mehr, bei dem man polymere Diole und Kettenverlängerer mit Isocyanat und gegebenenfalls Katalysatoren, Reaktivkettenverlängerern und sonstigen Zusatzstoffen zu einer Reaktionsmischung vermischt, in eine Form gibt und zum Polyurethanelastomer aushärtet, **dadurch gekennzeichnet, dass** die Reaktionsmischung des weiteren einen Emulgator aufweist und die Formtemperatur 70 bis 130 °C beträgt, wobei man die polymeren Diole, den Kettenverlängerer, den Emulgator und gegebenenfalls Katalysatoren, Reaktivkettenverlängerern und sonstigen Zusatzstoffen im Gegenstromverfahren bei einem Druck von mehr als 100 bar mit dem Isocyanat vermischt und die erhaltene Mischung in eine geschlossene Form gibt.

2. Verfahren nach Anspruch 1, **dadurch gekennzeichnet, dass** ein Reaktivkettenverlängerer eingesetzt wird und der Reaktivkettenverlängerer ein linearer Polyether auf Propylenoxidbasis mit zwei primären Aminogruppen und einem Molekulargewicht zwischen 100 und 500 g/mol ist.

3. Verfahren nach Anspruch 1 oder 2, **dadurch gekennzeichnet, dass** das Gewichtsverhältnis von polymerem Diol zu Kettenverlängerer im Bereich von 70:30 bis 40:60 liegt.

4. Verfahren nach einem der Ansprüche 1 bis 3, **dadurch gekennzeichnet, dass** der Kettenverlängerer Butandiol ist.

5. Verfahren nach einem der Ansprüche 1 bis 4, **dadurch gekennzeichnet, dass** das polymere Diol Polytetrahydrofuran mit einem zahlenmittleren Molekulargewicht von 200 bis 2500 g/mol ist.

6. Verfahren nach einem der Ansprüche 1 bis 5, **dadurch gekennzeichnet, dass** das Isocyanat Diphenylmethandiisocyanat, einschließlich Derivaten und Prepolymeren von Diphenylmethandiisocyanat, mit einer mittleren Funktionalität von 2,0 bis 2,2 ist.

7. Verfahren nach Anspruch 6, **dadurch gekennzeichnet, dass** die Funktionalität 2,0 ist.

8. Verfahren nach Anspruch 6 oder 7, **dadurch gekennzeichnet, dass** das Diphenylmethandiisocyanat 4,4'-Diphenylmethandiisocyanat ist.

9. Verfahren nach Anspruch 6 oder 7, **dadurch gekennzeichnet, dass** das Isocyanat ein Prepolymer auf Basis von 4,4'-Diphenylmethandiisocyanat und polymerem Diol ist, das des weiteren carbodiimidmodifiziertem 4,4'-Diphenylmethandiisocyanat enthält.

10. Verfahren nach einem der Ansprüche 1 bis 9, **dadurch gekennzeichnet, dass** der Emulgator ein nichtionisches Tensid ist.

11. Verfahren nach Anspruch 10, **dadurch gekennzeichnet, dass** der Emulgator ein Alkoxyethylenglycolether der allgemeinen Formel
RO(CH₂-CH₂-O)ₓH
ist, wobei R ein linearer oder verzweigtkettiger oder cyclischer Alkylrest mit 5 bis 20 Kohlenstoffatomen ist und x für eine ganze Zahl von 3 bis 15 steht.

12. Verfahren nach einem der Ansprüche 1 bis 11, **dadurch gekennzeichnet, dass** als Zusatzstoffe Füllstoffe und wasserabsorbierende Stoffe eingesetzt werden.

13. Verfahren nach Anspruch 1 bis 12, **dadurch gekennzeichnet, dass** der Isocyanatindex 80 bis 110 beträgt.

14. Polyurethanformteil, erhältlich nach einem Verfahren gemäß einem der Ansprüche 1 bis 13.

15. Polyurethanformteil nach Anspruch 14, **dadurch gekennzeichnet, dass** das Polyurethanformteil ein Verkleidungsteil für Nutzfahrzeuge, ein Karosseriebauteil im Fahrzeugbau oder ein Verkleidungsteil von einer Maschinenanlage ist.

## Claims

1. A process for producing pore-free thermoplastic polyurethane elastomer moldings having a Shore D hardness in accordance with DIN 53505 of 60 or more, in which polymeric diols and chain extenders are mixed with isocyanate and optionally catalysts, reactive chain extenders and other additives to form a reaction mixture, this is introduced into a mold and cured to form the polyurethane elastomer, wherein the reaction mixture further comprises an emulsifier and the mold temperature is from 70 to 130°C, where the polymeric diols, the chain extender, the emulsifier and, if appropriate, catalysts, reactive chain extenders and other additives are mixed with the isocyanate in a countercurrent process at a pressure of more than 100 bar and the mixture obtained is introduced into a closed mold.

2. The process according to claim 1, wherein a reactive chain extender is used and the reactive chain extender is a linear polyether based on propylene oxide and having two primary amino groups and a molecular weight in the range from 100 to 500 g/mol.

3. The process according to claim 1 or 2, wherein the weight ratio of polymeric diol to chain extender is in the range from 70:30 to 40:60.

4. The process according to any of claims 1 to 3, wherein the chain extender is butanediol.

5. The process according to any of claims 1 to 4, wherein the polymeric diol is polytetrahydrofuran having a number average molecular weight of from 200 to 2500 g/mol.

6. The process according to any of claims 1 to 5, wherein the isocyanate is diphenylmethane diisocyanate, including derivatives and prepolymers of diphenylmethane diisocyanate, having a mean functionality of from 2.0 to 2.2.

7. The process according to claim 6, wherein the functionality is 2.0.

8. The process according to claim 6 or 7, wherein the diphenylmethane diisocyanate is diphenylmethane 4,4'-diisocyanate.

9. The process according to claim 6 or 7, wherein the isocyanate is a prepolymer which is based on diphenylmethane 4,4'-diisocyanate and a polymeric diol and further comprises carbodiimide-modified diphenylmethane 4,4'-diisocyanate.

10. The process according to any of claims 1 to 9, wherein the emulsifier is a nonionic surfactant.

11. The process according to claim 10, wherein the emulsifier is an alkoxyethylene glycol ether of the general formula
RO(CH₂-CH₂-O)ₓH
where R is a linear or branched or cyclic alkyl radical having from 5 to 20 carbon atoms and x is an integer from 3 to 15.

12. The process according to any of claims 1 to 11, wherein fillers and water-absorbing substances are used as additives.

13. The process according to any of claims 1 to 12, wherein the isocyanate index is from 80 to 110.

14. A polyurethane molding which can be obtained by a process according to any of claims 1 to 13.

15. The polyurethane molding according to claim 14, wherein the polyurethane molding is a cladding component for commercial vehicles, a bodywork component in vehicle construction or a cladding component of a piece of machinery.

## Revendications

1. Procédé pour la fabrication de pièces moulées en élastomère polyuréthanne thermoplastique exemptes de pores, ayant une dureté Shore D selon DIN 53505 de 60 ou plus, dans lequel on mélange des diols polymères et des prolongateurs de chaîne avec un isocyanate et éventuellement des catalyseurs, des prolongateurs de chaîne réactifs et d'autres additifs, pour obtenir un mélange réactionnel, on l'introduit dans un moule et on le fait durcir en l'élastomère polyuréthanne, **caractérisé en ce que** le mélange réactionnel comporte en outre un émulsifiant et la température du moule est de 70 à 130 °C, et dans ce procédé on mélange avec l'isocyanate les diols polymères, le prolongateur de chaîne, l'émulsifiant et éventuellement des catalyseurs, des prolongateurs de chaîne réactifs et d'autres additifs dans le procédé à contre-courant sous une pression de plus de 100 mbars et on introduit dans un moule fermé le mélange obtenu.

2. Procédé selon la revendication 1, **caractérisé en ce qu'**on utilise un prolongateur de chaîne réactif et le prolongateur de chaîne réactif est un polyéther linéaire à base d'oxyde de propylène comportant deux groupes amino primaires et ayant une masse moléculaire comprise entre 100 et 500 g/mole.

3. Procédé selon la revendication 1 ou 2, **caractérisé en ce que** le rapport pondéral du diol polymère au prolongateur de chaîne se situe dans la plage allant de 70:30 à 40:60.

4. Procédé selon l'une quelconque des revendications 1 à 3, **caractérisé en ce que** le prolongateur de chaîne est le butanediol.

5. Procédé selon l'une quelconque des revendications 1 à 4, **caractérisé en ce que** le diol polymère est un polytétrahydrofuranne ayant une masse moléculaire moyenne en nombre de 200 à 2 500 g/mole.

6. Procédé selon l'une quelconque des revendications 1 à 5, **caractérisé en ce que** l'isocyanate est le diphénylméthane-diisocyanate, y compris des dérivés et prépolymères de diphénylméthane-diisocyanate, ayant une fonctionnalité moyenne de 2,0 à 2,2.

7. Procédé selon la revendication 6, **caractérisé en ce que** la fonctionnalité est égale à 2,0.

8. Procédé selon la revendication 6 ou 7, **caractérisé en ce que** le diphénylméthane-diisocyanate est le 4,4'-diphénylméthane-diisocyanate.

9. Procédé selon la revendication 6 ou 7, **caractérisé en ce que** l'isocyanate est un prépolymère à base de 4,4'-diphénylméthane-diisocyanate et de diol polymère, qui contient en outre un 4,4'-diphénylméthane-diisocyanate modifié par un carbodiimide.

10. Procédé selon l'une quelconque des revendications 1 à 9, **caractérisé en ce que** l'émulsifiant est un tensioactif non ionique.

11. Procédé selon la revendication 10, **caractérisé en ce que** l'émulsifiant est un alcoxyéthylène-glycoléther de formule générale
RO(CH₂-CH₂-O)ₓH
R étant un radical alkyle linéaire ou à chaîne ramifiée ou cyclique ayant de 5 à 20 atomes de carbone et x représentant un nombre entier valant de 3 à 15.

12. Procédé selon l'une quelconque des revendications 1 à 11, **caractérisé en ce qu'**on utilise comme additifs des charges et des substances absorbant l'eau.

13. Procédé selon l'une quelconque des revendications 1 à 12, **caractérisé en ce que** l'indice d'isocyanate vaut de 80 à 110.

14. Pièce moulée en polyuréthanne, pouvant être obtenue conformément à un procédé selon l'une quelconque de revendications 1 à 13.

15. Pièce moulée en polyuréthanne selon la revendication 14, **caractérisée en ce que** la pièce moulée en polyuréthanne est une pièce d'habillage pour véhicules utilitaires, un élément de construction de carrosserie dans la construction de véhicules ou une pièce d'habillage d'une installation mécanique.
